# EUROPEAN PATENT APPLICATION

(11) **EP 4 635 707 A1**
(43) Date of publication of application: **22.10.2025**
(21) Application number: 23919843.5
(22) Date of filing: 12.10.2023
(51) Int. Cl.: B29C 33/02, B29D 30/66

(54) **METHOD FOR PRODUCING MOLD FOR STUDDED TIRES, SAID MOLD, AND METHOD FOR PRODUCING STUDDED TIRES**

(30) Priority: 31.01.2023 JP 2023012815
(71) Applicant: The Yokohama Rubber Co., Ltd., Hiratsuka-shi, Kanagawa 254-8601 (JP)
(72) Inventor: NAGAOKA, Takuya, Hiratsuka-shi, Kanagawa 254-8601 (JP)
(74) Representative: Dilg, Haeusler, Schindelmann Patentanwaltsgesellschaft mbH
(86) International application number: PCT/JP2023/037054
(87) International publication number: WO 2024/161707

(57) **Abstract**

Provided are a method for producing a mold capable of accurately disposing each mold pin to project on a tread molding surface according to design specifications and the mold, and a method for producing studded tires. A bottom surface side of a flange portion (7), which is provided at a middle of each mold pin (5) in a longitudinal direction, is formed into a flat surface (7b) orthogonal to an axial direction of the mold pin (5), an axial length between a projecting distal end (6b) and the flat surface (7b) of the mold pin (5) is set to a predetermined length (L), a peripheral region of each pin hole (3) on a tread molding surface (2) is formed into a projecting or a recessed flat surface (4) orthogonal to a depth direction of the pin hole (3), by inserting each mold pin (5) into the corresponding pin hole (3) and bringing the flat surface (7b) and the flat surface (4) into contact with each other, the mold pin (5) is disposed projecting from the tread molding surface (2), thereby producing a mold (1), and a stud pin (15) is driven into an installation hole (13) of a base tire (BT) produced by vulcanizing a green tire (GT) using the mold (1), thereby producing a studded tire (ST).

## Description

### Technical Field

The present invention relates to a method for producing a mold for studded tires, the mold, and a method for producing studded tires.

### Background Art

In order to produce a studded tire, a base tire in which a large number of installation holes into which stud pins are driven are formed in a tread surface is required. In a vulcanization mold for producing the base tire, a large number of mold pins for forming installation holes on a tread molding surface thereof are disposed projecting (for example, see Patent Document 1).

If the mold pins are not disposed projecting from the tread molding surface of the mold in accordance with the design specifications, the installation holes are not formed in the base tire in accordance with the standard. Accordingly, in a studded tire produced by using this base tire, it is difficult to drive each stud pin into the tire in accordance with the specifications. Therefore, in order to manufacture a high-quality studded tire in which each stud pin is driven according to the standard, it is important that each mold pin is provided on the tread molding surface to project at the position, the projection height, and the projection direction in accordance with the design specification.

### Citation List

### Patent Document

Patent Document 1: Japanese UP S58-119403 Y

### Summary of Invention

### Technical Problem

The tread molding surface of the mold is a curved surface curved in the tire width direction and the tire circumferential direction. Therefore, even if the pin holes into which the mold pins are inserted can be accurately formed at the positions according to the design specifications with respect to the tread molding surface, it is difficult to accurately dispose the mold pins in the pin holes so as to project at the projection height and in the projection direction according to the design specifications. Therefore, there is room for improvement in disposing each mold pin to project from the tread molding surface as designed.

Accordingly, an object of the present invention is to provide a method for producing a mold for studded tires, the mold being capable of accurately disposing each mold pin to project from a tread molding surface according to design specifications and the mold, and a method for producing studded tires using the mold.

### Solution to Problem

A method for producing a mold for studded tires according to the present invention to achieve the object described above is a method for producing a mold for studded tires, including: forming a large number of pin holes in a tread molding surface; and inserting a mold pin into each of the pin holes, thereby disposing the mold pin to project from the tread molding surface. The method includes: providing a flange portion at a middle of the mold pin in a longitudinal direction such that a bottom surface side of the flange portion is formed into a flat surface orthogonal to an axial direction of the mold pin and a length in the axial direction between a projecting distal end of the mold pin and the flat surface is set to a predetermined length, forming a peripheral region of each of the pin holes on the tread molding surface into a projecting or recessed flat surface orthogonal to a depth direction of the pin hole, and inserting the mold pin into the corresponding pin hole and bringing the flat surface on the bottom surface side of the flange portion of the mold pin into contact with the flat surface in the peripheral region of the pin hole, thereby disposing the mold pin to project from the tread molding surface.

A mold for studded tires according to the present invention is a mold for studded tires, including: a mold pin inserted into each of a large number of pin holes formed in a tread molding surface to project from the tread molding surface; a bottom surface side of a flange portion at a middle of the mold pin in a longitudinal direction being formed into a flat surface orthogonal to an axial direction of the mold pin, a length in the axial direction between a projecting distal end of the mold pin and the flat surface being set to a predetermined length, a peripheral region of each of the pin holes on the tread molding surface being formed into a projecting or recessed flat surface orthogonal to a depth direction of the pin hole, and the mold pin being disposed to project from the tread molding surface in a state in which the mold pin is inserted into the corresponding pin hole, and the flat surface on the bottom surface side of the flange portion of the mold pin is in contact with the flat surface in the peripheral region of the pin hole.

A method for producing studded tires according to the present invention includes: vulcanizing a green tire using a mold produced by the above-described method for producing a mold for studded tires, thereby producing a base tire; forming an installation hole in a tread surface of the base tire by the mold pin disposed projecting from the tread molding surface of the mold; and driving a stud pin into the installation hole formed at a predetermined position on the tread surface.

### Advantageous Effects of Invention

According to the method of producing a mold for studded tires of the present invention, each mold pin is provided projecting from the tread molding surface in a state in which the flat surface on the bottom surface side of the flange portion provided at a middle of the mold pin in a longitudinal direction is in contact with the flat surface in the peripheral region of the pin hole. Accordingly, the projection direction of each mold pin from the tread molding surface can be set in the same direction as the depth direction of the pin hole into which the mold pin is inserted. The position and the depth direction of each pin hole can be accurately set as desired by machining each pin hole. Therefore, it is advantageous to set the position and the projection direction of each mold pin as designed. Further, the height from the flat surface in the peripheral region of each pin hole into which the mold pin is inserted to the projecting distal end of the mold pin is a predetermined length. The vertical difference between the flat surface in the peripheral region of each pin hole and the tread molding surface at that position can be set precisely as desired by using a known method for the flat surface in the peripheral region of each pin hole. Therefore, it is advantageous in obtaining the projection height of each mold pin from the tread molding surface according to the design specification. Therefore, each mold pin can be accurately disposed projecting from the tread molding surface according to the design specification.

According to the mold for studded tires of the present invention, each mold pin is accurately disposed projecting from the tread molding surface in accordance with the design specification.

According to the method for manufacturing studded tires of the present invention, the base tire is manufactured by vulcanizing the green tire using the mold in which each mold pin is accurately disposed projecting from the tread molding surface according to the design specification. Therefore, the installation hole is easily formed in the tread surface of the base tire at the position, the depth, and the depth direction according to the standard by each mold pin. As a result, by driving the stud pin into each installation hole formed at a predetermined position of the tread surface of the base tire, it is advantageous to produce a high-quality studded tire in which each stud pin is driven according to the standard.

### Brief Description of Drawings

FIG. 1 is an explanatory diagram illustrating an embodiment of a mold for studded tires in a longitudinal cross-sectional view of the tire.
FIG. 2 is an explanatory diagram illustrating the mold of FIG. 1 in a cross-sectional view of the tire.
FIG. 3 is an explanatory diagram illustrating a tread molding surface of the mold of FIG. 1 in a plan view.
FIG. 4 is a partially enlarged view of FIG. 1.
FIG. 5 is a plan view of FIG. 4.
FIG. 6 is an explanatory diagram illustrating the tread molding surface before a mold pin of FIG. 4 is inserted.
FIG. 7 is a plan view of FIG. 6.
FIG. 8 is an explanatory diagram illustrating a process of inserting the mold pin into a pin hole of FIG. 6.
FIG. 9 is an explanatory diagram schematically illustrating a process of producing the mold of FIG. 1.
FIG. 10 is an explanatory diagram illustrating another embodiment of the mold in a partially enlarged cross-sectional view of a tire.
FIG. 11 is a plan view of FIG. 10.
FIG. 12 is an explanatory diagram illustrating the tread molding surface before the mold pin of FIG. 10 is inserted.
FIG. 13 is a plan view of FIG. 12.
FIG. 14 is an explanatory diagram illustrating a process of inserting the mold pin into the pin hole of FIG. 12.
FIG. 15 is an explanatory diagram illustrating a tread surface of a base tire produced by vulcanizing a green tire using the mold illustrated in FIG. 1, in a longitudinal cross-sectional view of the tire.
FIG. 16 is an explanatory diagram illustrating a tread surface of a studded tire produced using the base tire of FIG. 15 in a longitudinal cross-sectional view of the tire.
FIG. 17 is an explanatory diagram illustrating the tread surface of FIG. 16 in a plan view.
FIG. 18 is an explanatory diagram illustrating the tread surface of the base tire produced by vulcanizing the green tire using the mold illustrated in FIG. 10, in a longitudinal cross-sectional view of the tire.
FIG. 19 is an explanatory diagram illustrating the tread surface of the studded tire produced using the base tire of FIG. 18 in a longitudinal cross-sectional view of the tire.
FIG. 20 is an explanatory diagram illustrating a tread surface of another studded tire in a plan view.
FIG. 21 is an explanatory diagram illustrating a process of measuring a projecting state of the mold pin of FIG. 4.

### Description of Embodiments

Hereinafter, a method for producing a mold for studded tires, the mold, and a method for producing studded tires using the mold will be described based on the embodiment shown in the drawings.

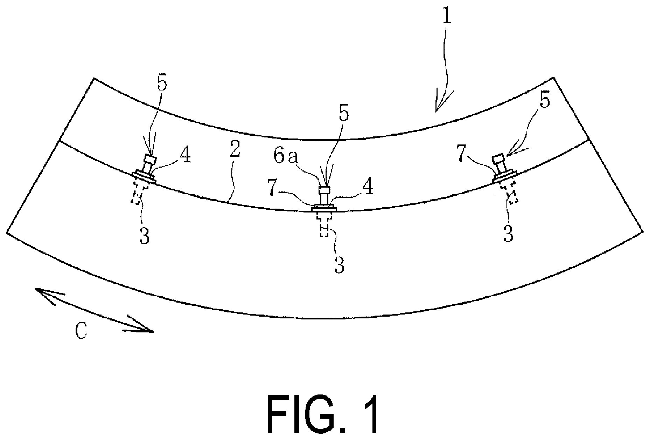

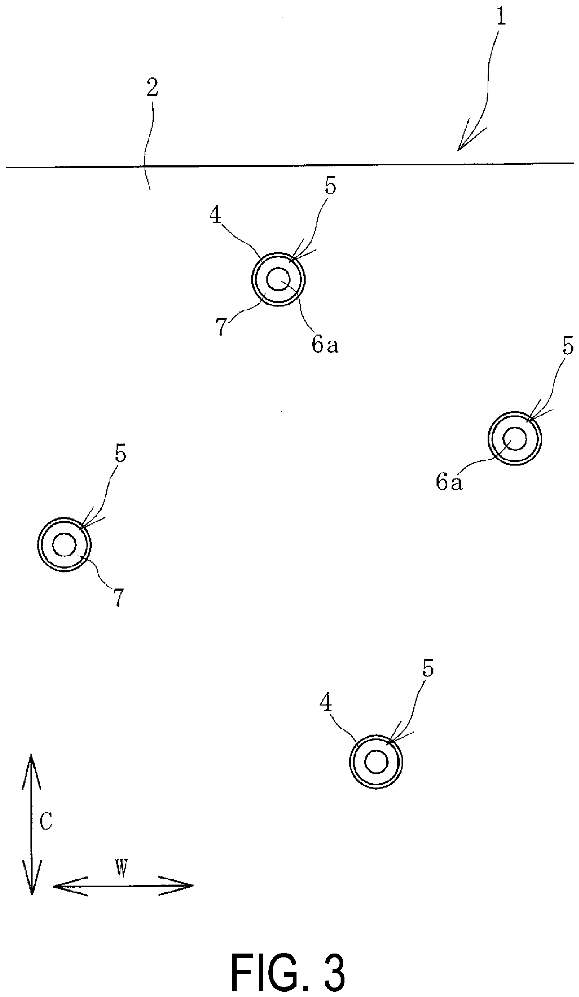

An embodiment of a mold 1 for studded tires (hereinafter referred to as a mold 1) illustrated in FIGS. 1 to 5 is a so-called sector mold of a sectional type mold. In a vulcanization process of a tire, a plurality of molds 1 are assembled into an annular shape, and a group of molds 1 assembled into the annular shape is sandwiched between a pair of annular side molds and the molds are closed. In the closed group of molds 1, a green tire GT is vulcanized. Accordingly, a base tire BT is produced, as described below.

The mold 1 is not limited to a sectional type, but may be a so-called upper and lower divided type. Arrows W and C in the drawings respectively indicate a width direction and a circumferential direction of a studded tire ST (base tire BT) to be produced. In the drawings, tire groove forming projections formed on the mold 1 are omitted. Tire grooves formed in the studded tire ST (base tire BT) are also omitted.

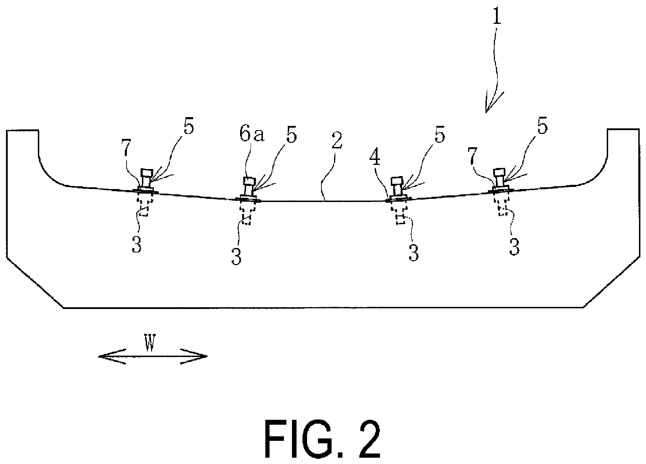

The mold 1 has a tread molding surface 2. As illustrated in FIG. 2, in a tire width direction W, the tread molding surface 2 is gently curved from a central portion toward both end portions in the width direction, and in a tire circumferential direction C, the tread molding surface 2 is curved in an arc shape as illustrated in FIG. 1, forming a curved surface according to a specification of the tire to be produced. A large number of pin holes 3 are formed at predetermined positions on the tread molding surface 2.

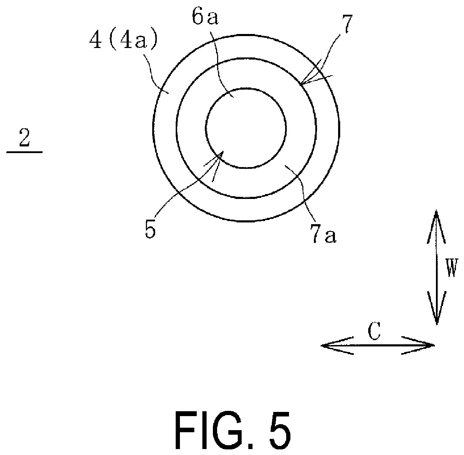

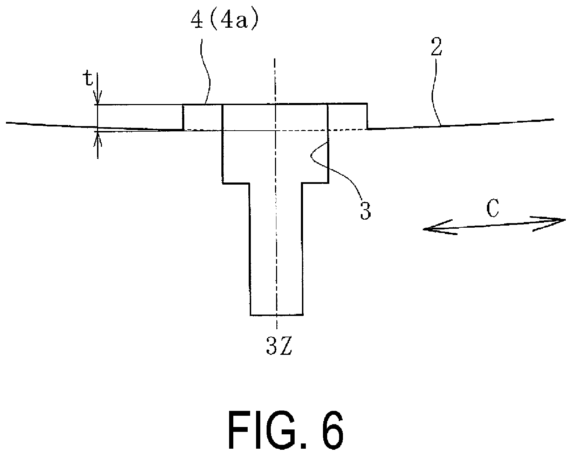

As illustrated in FIGS. 5 and 6, each pin hole 3 extends in a direction orthogonal to the tread molding surface 2 at an installation position thereof. That is, a depth direction of the pin hole 3 is a direction (normal line direction) orthogonal to the tread molding surface 2 at a position of a center axis 3z in a plan view of the pin hole 3.

A peripheral region of each pin hole 3 on the tread molding surface 2 is formed into a flat surface 4 (4a) orthogonal to the depth direction of the pin hole 3. In this embodiment, the flat surface 4 is a projecting flat surface 4a projecting from the tread molding surface 2. The flat surface 4 (4a) is, for example, an inner region of a circle having a radius of more than 50% and 100% or less of a diameter of a flange portion 7 described later with the center axis 3z in a plan view of the pin hole 3 as a center. A vertical difference t (a maximum height t of the flat surface 4a) between the tread molding surface 2 and the flat surface 4a at the position of the center axis 3z in a plan view of the pin hole 3 is, for example, 0.01 mm or more and 0.3 mm or less.

In this embodiment, an outer shape in a plan view of the flat surface 4a is circular, but may be other shapes (for example, elliptical, triangular, polygonal such as quadrangular). Alternatively, the shape in a plan view of the flat surface 4a can be changed to various shapes by providing a notch or a pattern inside the outer shape.

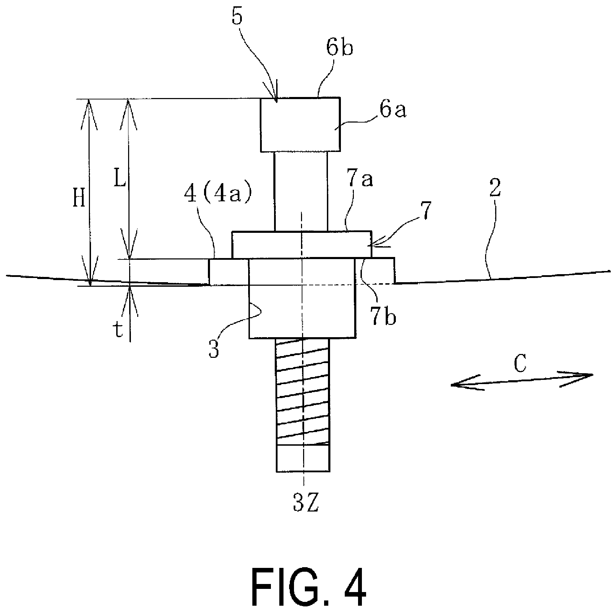

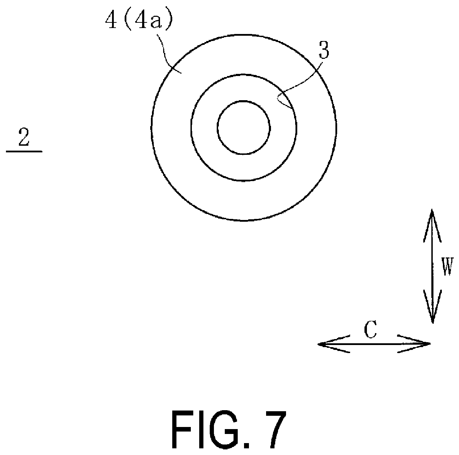

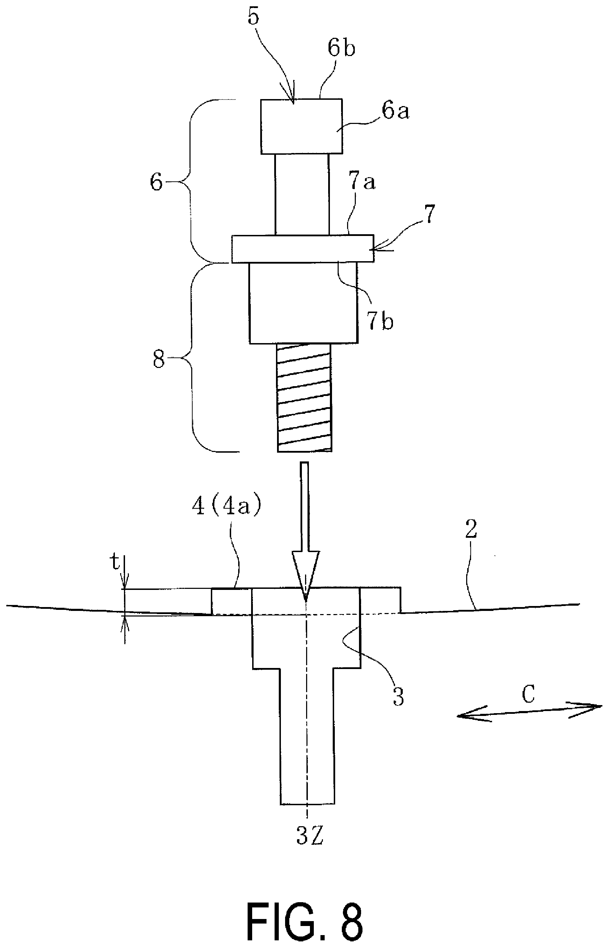

A mold pin 5 is inserted into each pin hole 3 so as to project from the tread molding surface 2. That is, as illustrated in FIG. 8, by inserting the mold pin 5 into the pin hole 3 illustrated in FIGS. 6 and 7, the mold pin 5 is disposed projecting from the tread molding surface 2 as illustrated in FIG. 4.

As illustrated in FIG. 8, the linear mold pin 5 has a flange portion 7 projecting to the outer circumferential side from a pin shaft diameter at a middle of the mold pin 5 in the longitudinal direction. With respect to the flange portion 7, one side in the longitudinal direction of the mold pin 5 is a projection portion 6 including the flange portion 7, and the other side in the longitudinal direction of the mold pin 5 is an embedded portion 8. A tip portion of the projection portion 6 is formed into a top portion 6a with an expanded diameter, and a tip of the top portion 6a is a projecting distal end 6b.

A bottom surface side of the flange portion 7 is formed into a flat surface 7b orthogonal to the axial direction of the mold pin 5. Further, in this embodiment, a surface 7a of the flange portion 7 is a flat surface parallel to the flat surface 7b. The projecting distal end 6b is a flat surface (has a flat surface) orthogonal to the axial direction of the mold pin 5. The axial length between the projecting distal end 6b and the flat surface 7b is set to a predetermined length L determined in advance.

On the tread molding surface 2 of the mold 1, the projection portion 6 including the flange portion 7 projects from the pin hole 3, and the embedded portion 8 is embedded in the pin hole 3. More specifically, each mold pin 5 inserted into the corresponding pin hole 3 is disposed to project from the tread molding surface 2 in a state in which the flat surface 7b of the flange portion 7 and the flat surface 4a in the peripheral region of the pin hole 3 are brought into contact with each other.

As illustrated in FIG. 4, in this embodiment, a projection height H of each mold pin 5 from the tread molding surface 2 is a value (H = L + t) obtained by adding the vertical difference t (maximum height t of the flat surface 4a) between the tread molding surface 2 and the flat surface 4a at the position of the center axis 3z in a plan view of the pin hole 3 to the axial length L (predetermined length) between the projecting distal end 6b and the flat surface 7b. In addition, a projection direction of each mold pin 5 is the same direction as the depth direction of the pin hole 3 into which it is inserted.

Next, an example of a procedure for producing the mold 1 illustrated in FIGS. 1 to 5 will be described.

The pin hole 3 is formed at a predetermined position on the tread molding surface 2 of the mold 1 by machining. Thus, a large number of pin holes 3 are formed in the tread molding surface 2. The peripheral region of each pin hole 3 on the tread molding surface 2 is formed into the flat surface 4a orthogonal to the depth direction of the pin hole 3. The flat surface 4a may also be formed by machining.

Further, the flange portion 7 is provided at the middle of each mold pin 5 in the longitudinal direction, and the bottom surface side of the flange portion 7 is formed into the flat surface 7b orthogonal to the axial direction of the mold pin 5. Further, the axial length between the projecting distal end 6b and the flat surface 7b of the mold pin 5 is set to a predetermined length L. Each mold pin 5 is finished to the above-described specifications by machining.

Next, as illustrated in FIG. 8, each mold pin 5 is inserted into the corresponding pin hole 3, and as illustrated in FIGS. 4 and 5, and by bringing the flat surface 7b of the flange portion 7 of the mold pin 5 and the flat surface 4a in the peripheral region of the pin hole 3 into contact with each other, the mold pin 5 is disposed projecting from the tread molding surface 2. The operation of inserting each mold pin 5 into the pin hole 3 can be performed manually, but may be performed by a known control device such as a robot arm.

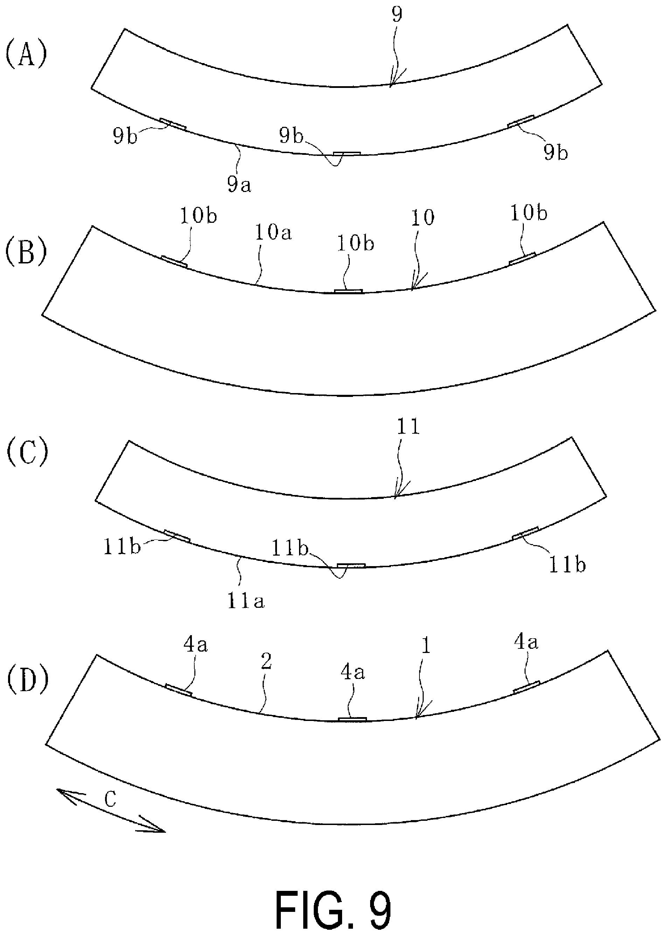

As illustrated in FIGS. 9(A) to 9(D), the tread molding surface 2 can be formed by sequentially transferring, from a master mold 9 to a rubber mold 10, a gypsum mold 11, and the mold 1, the shape of the surface thereof. Specifically, as illustrated in FIG. 9(A), the master mold 9 having a surface 9a having the same shape as a tread surface 12 of the base tire BT to be produced is manufactured by a known method. Then, rubber is poured into the surface 9a of the master mold 9 and solidified, thereby producing the rubber mold 10. When the master mold 9 and the rubber mold 10 are separated at the surface 9a, the surface 9a of the master mold 9 is transferred to a surface 10a of the rubber mold 10 as illustrated in FIG. 9(B). Then, gypsum is poured into the surface 10a of the rubber mold 10 and solidified, thereby producing the gypsum mold 11. When the rubber mold 10 and the gypsum mold 11 are separated at the surface 10a, the surface 10a of the rubber mold 10 is transferred to a surface 11a of the gypsum mold 11 as illustrated in FIG. 9(C). Then, molten metals are poured into the surface 11a of the gypsum mold 11 and solidified, thereby producing the mold 1. When the gypsum mold 11 and the mold 1 are separated at the surface 11a, the tread molding surface 2 to which the surface 11a of the gypsum mold 11 is transferred is formed on the mold 1 as illustrated in FIG. 9(D).

When the tread molding surface 2 is formed as illustrated in FIG. 9, flat surface forming portions 9b, 10b, and 11b corresponding to the flat surface 4a in the peripheral region of the pin hole 3 may be provided on the surfaces 9a, 10a, and 11a of the master mold 9, the rubber mold 10, and the gypsum mold 11. Thus, when the tread molding surface 2 is finally formed, the flat surface 4a can be formed at the same time. The formed flat surface 4a is finished as designed by machining if necessary. When the flat surface 4a which has a projecting shape is formed on the tread molding surface 2, the flat surface forming portions 9b and 11b have a recessed flat surface shape, and the flat surface forming portion 10b has a projecting flat surface shape.

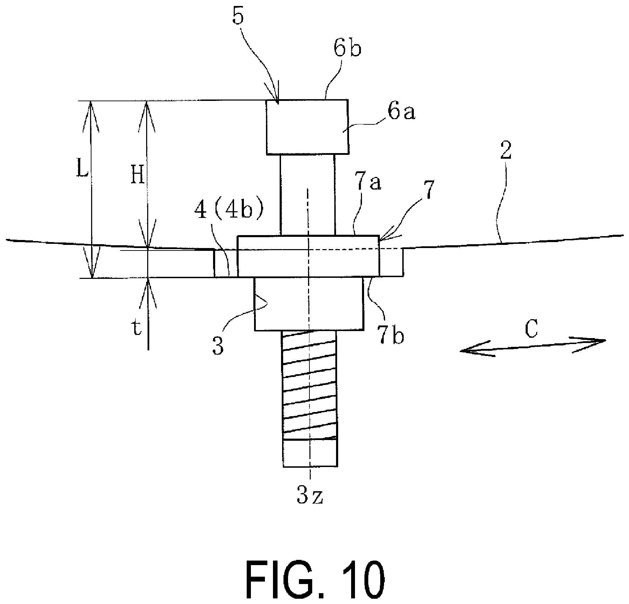

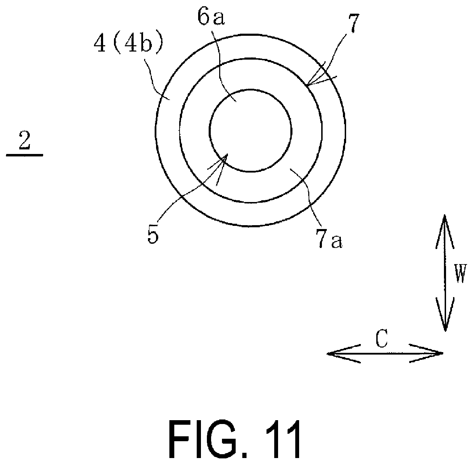

The embodiment of the mold 1 illustrated in FIGS. 10 and 11 has a recessed flat surface 4b which is recessed with respect to the tread molding surface 2. This mold 1 differs from the mold 1 illustrated in FIGS. 1 to 5 only in that the flat surface 4 is the recessed flat surface 4b while the flat surface 4 is the projecting flat surface 4a in the mold 1 illustrated in FIGS. 1 to 5.

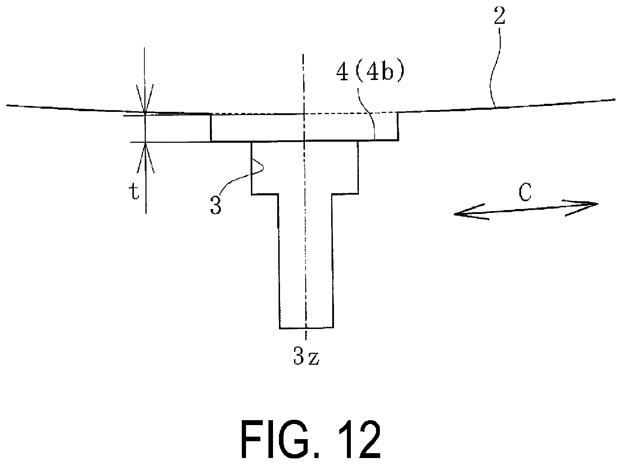

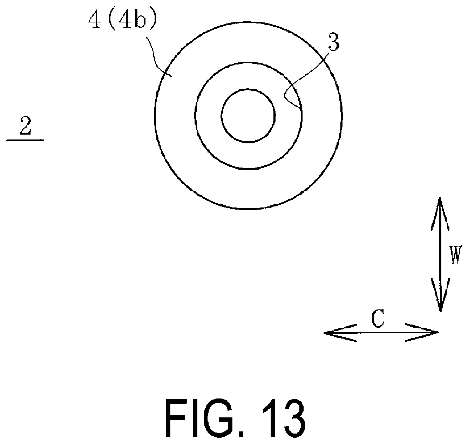

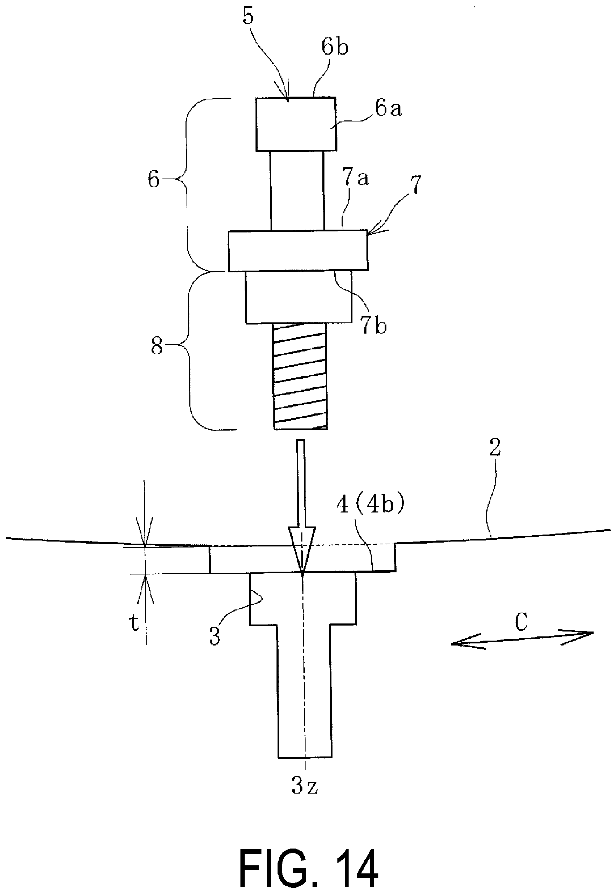

As illustrated in FIG. 14, by inserting the mold pin 5 into the pin hole 3 illustrated in FIGS. 12 and 13, the mold pin 5 is projected from the tread molding surface 2 as illustrated in FIG. 10. The vertical difference t (a minimum height t of the flat surface 4b) between the tread molding surface 2 and the flat surface 4b at the position of the center axis 3z in a plan view of the pin hole 3 is, for example, 0.01 mm or more and 0.3 mm or less.

In this mold 1, the projection height H of each mold pin 5 from the tread molding surface 2 is a value (H = L - t) obtained by subtracting the vertical difference t (minimum depth t of the flat surface 4b) between the tread molding surface 2 and the flat surface 4b at the position of the center axis 3z in a plan view of the pin hole 3 from the axial length L (predetermined length) between the projecting distal end 6b and the flat surface 7b. The projection direction of each mold pin 5 is the same direction as the depth direction of the pin hole 3 into which it is inserted.

A procedure for producing this mold 1 is similar to that of the mold 1 illustrated in FIGS. 1 to 5, and is different only in that the projecting flat surface 4a is changed to the recessed flat surface 4a. The tread molding surface 2 of the mold 1 can also be formed by a similar procedure as illustrated in FIG. 9. When the flat surface 4b which has a recessed shape is formed on the tread molding surface 2 as in this embodiment, the flat surface forming portions 9b and 11b in FIG. 9 have a projecting flat surface shape, and the flat surface forming portion 10b has a recessed flat surface shape.

According to the method of producing the mold 1 described above, each mold pin 5 is disposed protruding from the tread molding surface 2 in a state in which the flat surface 7b on the bottom surface side of the flange portion 7 and the flat surface 4 (4a, 4b) in the peripheral region of the pin hole 3 abut against each other, so that the projection direction of the mold pin 5 from the tread molding surface 2 can be set in the same direction as the depth direction of the pin hole into which the mold pin 5 is inserted. Then, the position and the depth direction of each pin hole 3 can be accurately set as desired by machining each pin hole 3, so that it is advantageous to set the position and the projection direction of each mold pin 5 as designed.

Further, the height from the flat surface 4 (4a, 4b) in the peripheral region of the pin hole 3 into which the mold pin 5 is inserted to the projecting distal end 6b of the mold pin 5 is a predetermined length L. For the vertical difference t between the flat surface 4 (4a, 4b) in the peripheral region of the pin hole 3 and the tread molding surface 2 at that position, the flat surface 4 (4a, 4b) can be set precisely as desired by using a known method such as a method of transferring the surface 9a of the master mold 9 to the tread molding surface 2 of the mold 1 illustrated in FIG. 9 or machining. Therefore, it is advantageous to set the projection height H of each mold pin 5 from the tread molding surface 2 to the design specification.

As a result, each mold pin 5 can be accurately disposed projecting from the tread molding surface 2 according to the design specification. That is, in the above-described mold 1, the flat surface 4 (4a, 4b) on the tread molding surface 2 side and the flat surface 7b on the mold pin 5 side are brought into contact with each other, so that each mold pin 5 is accurately disposed projecting from the tread molding surface 2 as designed.

Next, an example of a procedure of producing the studded tire ST using the mold 1 illustrated in FIGS. 1 to 5 will be described.

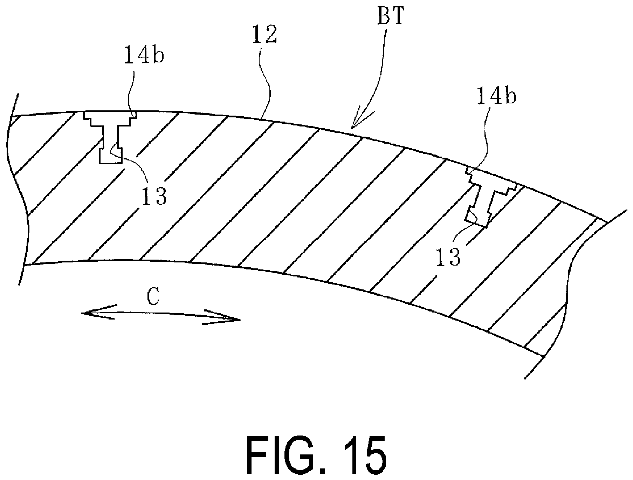

First, the green tire GT is molded by a known method, and then the green tire G is vulcanized by a known method using the mold 1 illustrated in FIGS. 1 to 5. In this vulcanization step, the green tire GT is shaped in the closed mold 1 to manufacture the base tire BT illustrated in FIG. 15. In the tread surface 12 of the base tire BT, an installation hole 13 is formed by each mold pin 5. In a peripheral region of each installation hole 13 of the tread surface 12, a flat surface 14b to which the flat surface 4a of the mold 1 is transferred is formed. In this embodiment, since the projecting flat surface 4a is formed on the mold 1, the flat surface 14b which has a recessed shape is formed on the tread surface 12.

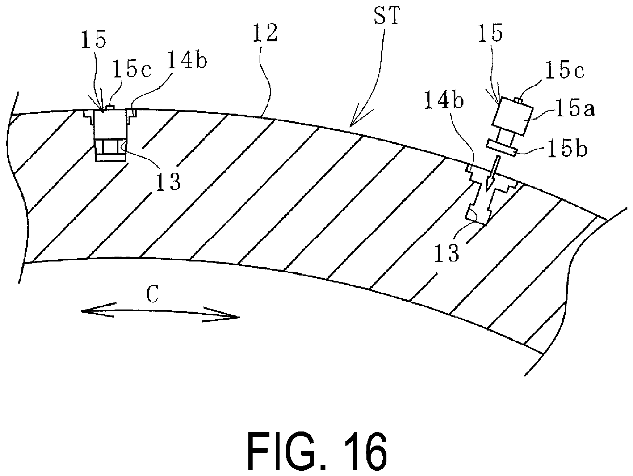

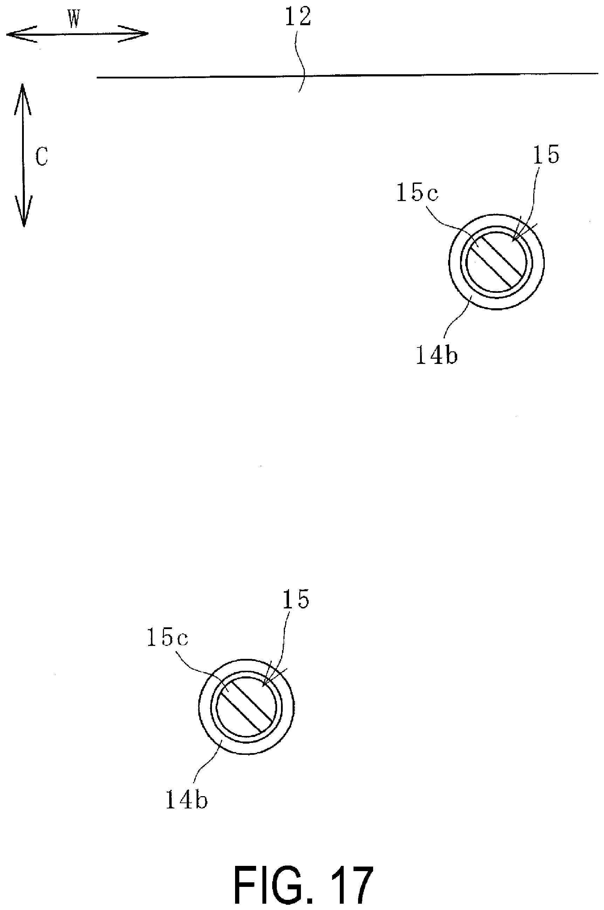

Next, as illustrated in FIG. 16, a stud pin 15 is driven into each installation hole 13 formed at predetermined positions on the tread surface 12 using a known driving device, thereby producing the studded tire ST illustrated in FIGS. 16 and 17. The stud pin 15 has a top portion 15a and a flanged root portion 15b, and a projection 15c is projected upward on an upper surface of the top portion 15a. The top portion 15a and the root portion 15b are connected by a connecting body having a smaller diameter. The stud pin 15 is not limited to the illustrated specification, but may have various desired specifications. In this stud pin 15, the projection 15c is a rectangular parallelepiped, but various shapes of projection 15c can be adopted.

After the stud pin 15 has been driven in, the stud pin 15 is in a state in which the root portion 15b is embedded in the installation hole 13, the top portion 15a is exposed to the tread surface 12, and the projection 15c protrudes outward from the tread surface 12. The stud pin 15 having a preset specification is driven into each installation hole 13 in a preset driving state, so that the studded tire ST having a desired specification is formed.

As illustrated in FIG. 17, in the studded tire ST, in a peripheral region of the stud pin 15 on the tread surface 12, a recessed flat surface 14b is formed due to the flat surface 4a of the mold 1. Since the flat surface 14b extends radially outward beyond an outer edge of the top portion 15a of the stud pin 15, a shape (outer shape) of the flat surface 14b can be grasped by visually observing the tread surface 12 of the studded tire ST.

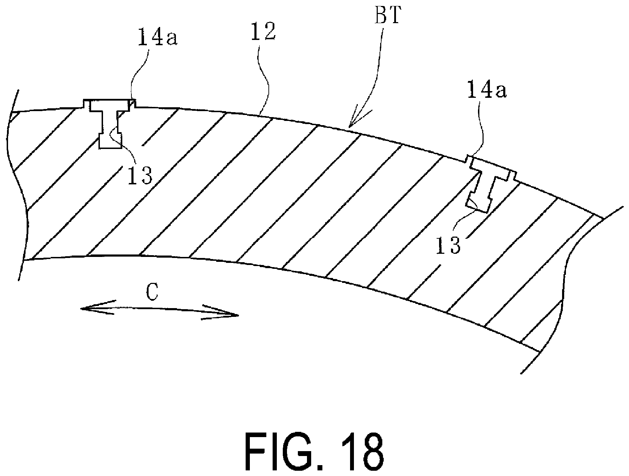

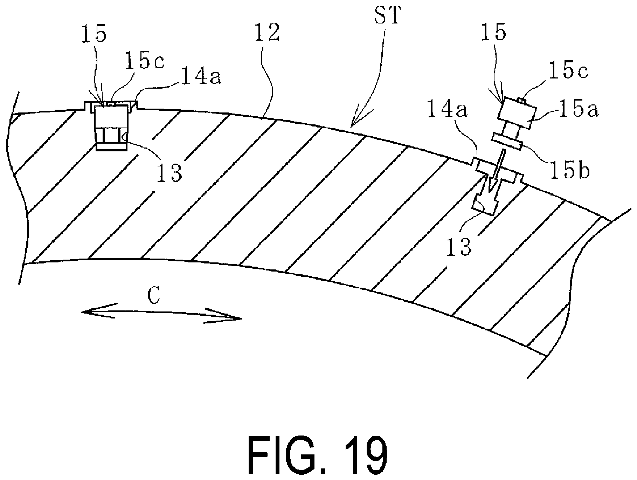

The procedure for producing the studded tire ST using the mold 1 illustrated in FIGS. 10 and 11 is the same as the case where the mold 1 illustrated in FIGS. 1 to 5 is used. The mold 1 illustrated in FIGS. 10 and 11 has the recessed flat surface 4b on the tread molding surface 2. Therefore, the base tire BT illustrated in FIG. 18 is produced. In this base tire BT, a projecting flat surface 14a is formed in the peripheral region of the installation hole 13 of the tread surface 12. Next, as illustrated in FIG. 19, the stud pin 15 is driven into each installation hole 13 formed at predetermined positions on the tread surface 12 using a known driving device, thereby producing the studded tire ST. In the studded tire ST illustrated in FIG. 19, the projecting flat surface 14a is formed in the peripheral region of the stud pin 15 on the tread surface 12. Since the flat surface 14a extends radially outward beyond the outer edge of the top portion 15a of the stud pin 15, the shape (outer shape) of the flat surface 14a can be grasped by visually observing the tread surface 12 of the studded tire ST.

According to the method of producing the studded tire ST described above, the green tire GT is vulcanized using the mold 1 described above to manufacture the base tire BT. Therefore, by each mold pin 5, the installation hole 13 is easily formed in the tread surface 12 of the base tire BT at the position, the depth, and the depth direction according to the standard. As a result, by driving the stud pin 15 into each installation hole 13 formed at the predetermined positions of the tread surface 12 of the base tire BT, it is advantageous to produce a high-quality studded tire ST in which each stud pin 15 is driven according to the standard.

In the studded tire ST illustrated in FIG. 17, each stud pin 15 has the same specification and the same driven state. However, a plurality of types (for example, two types) of stud pins 15 having different specifications may be used for one studded tire ST. Alternatively, one type of stud pin 15 may be driven into one studded tire ST in different driving states, and a plurality of types (for example, two types) of stud pins 15 having different driving states may be mixed.

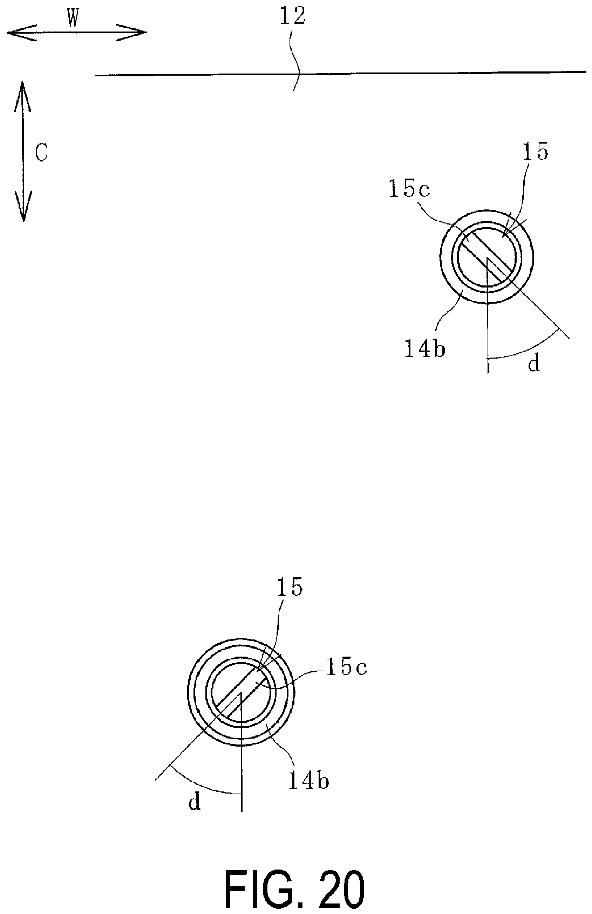

On the tread surface 12 of the studded tire ST illustrated in FIG. 20, the stud pins 15 having the same specifications are disposed projecting, but the direction of the projection 15c differs. That is, the projection 15c of one stud pin 15 (disposed at the upper right in FIG. 20) is inclined at an angle d to the left side with respect to the tire circumferential direction C, and the peripheral region of this stud pin 15 on the tread surface 12 is the flat surface 14b having a simple circular shape in a plan view. The projection 15c of the other stud pin 15 (disposed on the lower left side in FIG. 20) is inclined to the right side at the angle d, and the peripheral region of this stud pin 15 on the tread surface 12 has a circular pattern on the flat surface 14b having a simple circular shape to form the flat surface 14b having a double circular shape in a plan view. This circular pattern can be formed by processing the flat surface 4a of the mold 1 when the green tire GT is vulcanized to produce the base tire BT.

As illustrated in FIG. 20, by making a shape in a plan view of the flat surface 14b in the peripheral region of the installation hole 13 into which each stud pin 15 is driven different according to the specifications and the driving state of the stud pin 15 to be driven, the specifications and the driving state of the stud pin 15 can be associated with the shape in a plan view of the flat surface 14b in the peripheral region of the installation hole 13. That is, when the shape in a plan view of the flat surface 14b in the peripheral region of the installation hole 13 is a shape A, the stud pin 15 to be driven into the installation hole 13 is set to a specification A or a driven state A, and when the shape in a plan view of the flat surface 14b is a shape B, the stud pin 15 to be driven into the installation hole 13 is set to a specification B or a driven state B. When the stud pins 15 are associated with each other in this manner, there is an advantage that whether or not the stud pin 15 having a predetermined specification or driven state are driven into proper installation hole 13 can be checked by visually observing the tread surface 12 of the studded tire ST.

In the mold 1 for producing such a studded tire ST, the shape in a plan view of the flat surface 4 in the peripheral region of each pin hole 3 may be set in accordance with the arrangement of each pin hole 3 on the tread molding surface 2, and a plurality of types of flat surfaces 4 having different shapes in a plan view may be formed in the mold 1. By producing such a mold 1, it is possible to manufacture the studded tire ST illustrated in FIG. 20.

For vulcanization of the green tire GT, the mold 1 in which the projection height H and the projection direction of each mold pin 5 disposed projecting at a predetermined position on the tread molding surface 2 are within a preset tolerance range is used. Therefore, for each mold 1, the projection height H and the projection direction of the mold pin 5 are measured.

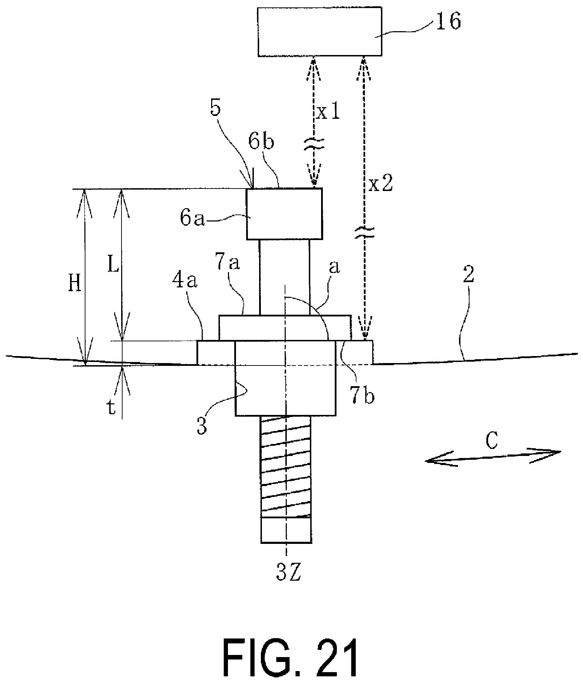

As illustrated in FIG. 21, in the above-described mold 1, the projection height H and the projection direction of each mold pin 5 with respect to the tread molding surface 2 are measured with reference to the flat surface 4 (4a) in the peripheral region of each pin hole 3 or the surface 7a of the flange portion 7 of each mold pin 5 formed parallel to the flat surface 4 (4a). For example, when the flat surface 4a is used as a reference, a vertical distance x2 from a known non-contact type measuring machine 16 such as a laser sensor to the flat surface 4a and a vertical distance x1 from the measuring device 16 to the projecting distal end 6b are measured, and the vertical distance x1 is subtracted from the vertical distance x2, thereby measuring the height L from the flat surface 4a to the projecting distal end 6b. Since the vertical difference t between the projecting flat surface 4a and the tread molding surface 2 is grasped in advance when the flat surface 4a is formed, the projection height H is calculated by adding the vertical difference t to the measurement value of the height L. It is determined whether or not the calculated projection height H is within the tolerance range.

When the surface 7a of the flange portion 7 is used as a reference, the distance from the measuring machine 16 to the surface 7a is measured as the vertical distance x2. The height (thickness) of the flange portion 7 is known in advance when the flange portion 7 is formed. Therefore, a value obtained by adding the height of the flange portion 7 to the measured vertical distance x2 is a measurement value of the height L. The projection height H is calculated by adding the vertical difference t to the measurement value of the height L.

The projection direction of the mold pin 5 can be considered to be substantially the same as the depth direction of the pin hole 3 (an axial direction of the center axis 3Z in a plan view). The depth direction of the pin hole 3 with respect to the tread molding surface 2 is grasped when the pin hole 3 is formed. Therefore, when the flat surface 4a is used as a reference, the vertical distance x2 from the measuring machine 16 is measured at each of two separated points on the flat surface 4a using the measuring machine 16, and an inclination angle of the flat surface 4a with respect to the depth direction of the pin hole 3 (the axial direction of the center axis 3Z in a plan view) is calculated as a projection angle using the measurement value and the separation distance between the two points. Similarly, when the surface 7a is used as a reference, an inclination angle of the flat surface 4a with respect to the depth direction of the pin hole 3 (the axial direction of the center axis 3Z in a plan view) is calculated as a projection angle. It is then determined whether or not this calculated projection angle is within a tolerance range.

By using the flat surfaces 4a and 7a as references as described above, it is advantageous to simply and accurately grasp the projection height H and the projection direction. Then, for vulcanization of the green tire GT, by using the mold 1 in which the measurement results of the projection height H and the projection direction of each mold pin 5 are within the preset tolerance range, the base tire BT is manufactured. Even when the mold 1 having the recessed flat surface 4b illustrated in FIGS. 10 and 11 is used, the projection height H and the projection direction of each mold pin 5 with respect to the tread molding surface 2 may be measured with reference to the flat surface 4 (4b) or the surface 7a of the flange portion 7 of each mold pin 5 formed in parallel with the flat surface 4 (4b), as in the method illustrated in FIG. 21.

### Reference Signs List

1 Mold
2 Tread molding surface
3 Pin hole
4 (4a, 4b) Flat surface
5 Mold pin
6 Projection portion
6a Top portion
6b Projecting distal end
7 Flange portion
7a Surface
7b Flat surface on bottom surface side
8 Embedded portion
9 Master mold
9a Surface
9b Flat surface forming portion
10 Rubber mold
10a Surface
10b Flat surface forming portion
11 Gypsum mold
11a Surface
11b Flat surface forming portion
12 Tread surface
13 Installation hole
14 (14a, 14b) Flat surface
15 Stud pin
15a Top portion
15b Root portion
15c Projection
16 Measuring machine
GT Green tire
BT Base tire
ST Studded tire

## Claims

1. A method for producing a mold for studded tires, the method comprising: forming a large number of pin holes in a tread molding surface; and inserting a mold pin into each of the pin holes, thereby disposing the mold pin to project from the tread molding surface; the method comprising:
providing a flange portion at a middle of the mold pin in a longitudinal direction such that a bottom surface side of the flange portion is formed into a flat surface orthogonal to an axial direction of the mold pin and a length in the axial direction between a projecting distal end of the mold pin and the flat surface is set to a predetermined length,
forming a peripheral region of each of the pin holes on the tread molding surface into a projecting or recessed flat surface orthogonal to a depth direction of the pin hole, and
inserting the mold pin into the corresponding pin hole and bringing the flat surface on the bottom surface side of the flange portion of the mold pin into contact with the flat surface in the peripheral region of the pin hole, thereby disposing the mold pin to project from the tread molding surface.

2. The method for producing a mold for studded tires according to claim 1, wherein the tread molding surface is formed on the mold by sequentially transferring, from a master mold to a rubber mold, a gypsum mold, and the mold, a shape of a surface thereof, and flat surface forming portions corresponding to the flat surface in the peripheral region of each of the pin holes are provided on the surfaces of the master mold, the rubber mold, and the gypsum mold.

3. The method for producing a mold for studded tires according to claim 1 or 2, wherein a shape in a plan view of the flat surface in the peripheral region of each of the pin holes is set in accordance with an arrangement of each of the pin holes on the tread molding surface, and a plurality of types of the flat surface having different shapes in a plan view are formed on the tread molding surface.

4. A mold for studded tires, comprising a mold pin inserted into each of a large number of pin holes formed in a tread molding surface to project from the tread molding surface;
a bottom surface side of a flange portion at a middle of the mold pin in a longitudinal direction being formed into a flat surface orthogonal to an axial direction of the mold pin,
a length in the axial direction between a projecting distal end of the mold pin and the flat surface being set to a predetermined length,
a peripheral region of each of the pin holes on the tread molding surface being formed into a projecting or recessed flat surface orthogonal to a depth direction of the pin hole, and
the mold pin being disposed to project from the tread molding surface in a state in which the mold pin is inserted into the corresponding pin hole, and the flat surface on the bottom surface side of the flange portion of the mold pin is in contact with the flat surface in the peripheral region of the pin hole.

5. A method for producing studded tires, the method comprising:
vulcanizing a green tire using a mold produced by the method for producing a mold for studded tires according to any of claims 1 to 3, thereby producing a base tire;
forming an installation hole in a tread surface of the base tire by the mold pin disposed projecting from the tread molding surface of the mold; and
driving a stud pin into the installation hole formed at a predetermined position on the tread surface.

6. The method for producing studded tires according to claim 5, comprising:
measuring a projection height and a projection direction of the mold pin with respect to the tread molding surface with reference to the flat surface in the peripheral region of each of the pin holes of the mold into which the mold pin is inserted, or a surface of the flange portion of the mold pin formed parallel to the flat surface on the bottom surface side of the flange portion; and
vulcanizing the green tire using the mold in which measurement results of the projection height and the projection direction are within a preset tolerance range, thereby producing the base tire.
